Europäisches Patentamt

European Patent Office

Office européen des brevets

(11) Veröffentlichungsnummer: **0 367 088**

**A1**

(12) **EUROPÄISCHE PATENTANMELDUNG**

(21) Anmeldenummer: 89119803.8

(22) Anmeldetag: 25.10.89

(51) Int. Cl.5 **B01J 23/80 , C01B 3/16**

(30) Priorität: 03.11.88 DE 3837308

(43) Veröffentlichungstag der Anmeldung:
09.05.90 Patentblatt 90/19

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Wanjek, Herbert, Dr.**
**Budapester Strasse 51**
**D-6700 Ludwigshafen(DE)**
Erfinder: **Witte, Claus, Dr.**
**Sonnenwendstrasse 64**
**D-6702 Bad Duerkheim(DE)**
Erfinder: **Sprague, Michael Jolyon, Dr.**
**Lachner Strasse 3**
**D-6800 Mannheim 1(DE)**
Erfinder: **Irgang, Matthias, Dr.**
**Andreas-Hofer-Weg 41**
**D-6710 Frankenthal(DE)**
Erfinder: **Mross, Wolf Dieter, Dr.**
**Anselm-Feuerbach-Strasse 21**
**D-6710 Frankenthal(DE)**
Erfinder: **Hoelderich,Wolfgang, Dr.**
**Mannheimer Strasse 18c**
**D-6710 Frankenthal(DE)**

(54) **Kupferhaltiger Katalysator zur Tieftemperaturkonvertierung.**

(57) Kupferhaltige Katalysatoren für die Tieftemperaturkonvertierung bei Temperaturen von 150 bis 300° C und 10 bis 40 bar, die zusätzlich Aluminium, Zink gegebenenfalls in Form der Verbindungen oder Oxide enthalten, die durch gemeinsame Fällung hergestellt werden, wobei die kupferhaltigen Katalysatoren Kalium und eine an den Kaliumgehalt angepaßte BET-Oberfläche besitzen, wobei der Kaliumgehalt von 0,1 bis 3,0 Gew.% bei einer BET-Oberfläche von 30 bis 160 m²/g eingestellt ist, sowie deren Verwendung zur Herstellung von Wasserstoff und Kohlendioxid aus Kohlenmonoxid und Wasser.

EP 0 367 088 A1

## Kupferhaltiger Katalysator zur Tieftemperaturkonvertierung

Die Erfindung betrifft kupferhaltige Katalysatoren für die Umsetzung von Kohlenmonoxid und Wasser zu Kohlendioxid und Wasserstoff bei niedrigen Temperaturen, sowie Verfahren zur Herstellung dieser Katalysatoren und die Verwendung dieser Katalysatoren zur Herstellung von Wasserstoff und Kohlendioxid aus Kohlenmonoxid und Wasser.

Die Umsetzung wird in der Technik einstufig oder in mehreren Stufen durchgeführt, wobei im Temperaturbereich oberhalb 300 °C (Hochtemperaturkonvertierung) im allgemeinen eisenoxidhaltige Katalysatoren und im Temperaturbereich von 150 bis 300 °C (Tieftemperaturkonvertierung) kupferhaltiger Katalysatoren eingesetzt werden.

Solche Tieftemperatur-Katalysatoren bestehen im allgemeinen aus Kupfer oder Kupferverbindungen in Kombination mit Verbindungen anderer Elemente, bevorzugt Aluminium und Zink. Die Elemente werden bevorzugt in Form der Hydroxide, der Oxide oder der Carbonate eingesetzt. Typische Zusammensetzungen solcher Katalysatoren sind beispielsweise aus GB-A-2 087 855 bekannt.

Bei der Konvertierung wird die Zusammensetzung des aus dem Reaktor austretenden Gases durch das sich einstellende Gleichgewicht bestimmt. Da sich das Gleichgewicht der Reaktion mit steigender Temperatur auf die Seite der Ausgangsverbindungen verschiebt und hohe Restkonzentrationen im Austrittsgas zu Ausbeuteverlusten führen, müssen die verwendeten Katalysatoren besonders bei tiefer Temperatur eine hohe katalytische Aktivität aufweisen.

Zur Herstellung von Katalysatoren mit diesen Eigenschaften sind viele Wege bekannt. Ein verfahren besteht darin, die Kupfer-, Aluminium- und Zinkkomponente gemeinsam zu fällen und das Fällungsprodukt zum Katalysator weiterzuverarbeiten. So wird beispielsweise in GB-A-1 131 631 vorgeschlagen, eine Lösung von Natriumcarbonat mit einer Lösung von Kupfer-, Zink- und Aluminiumnitrat zu vereinigen und den entstehenden Niederschlag, bestehend aus Aluminiumoxidhydrat und gemischten Hydroxycarbonaten von Kupfer und Zink bei 300 °C einer Temperaturbehandlung zu unterwerfen und anschließend zu tablettieren.

Ein anderes bekanntes verfahren besteht darin, zunächst die Kupfer- und die Aluminiumkomponente und danach erst die Zinkkomponente des Katalysators zu fällen. So ist beispielsweise aus der US-PS 4 308 176 bekannt, aus einer wäßrigen Lösung von Kupfer- und Aluminiumnitrat durch

Zusatz von Ammoniumcarbonat einen Niederschlag zu erzeugen. Nach Abfiltrieren und Waschen wird der Niederschlag bei höheren Temperaturen calciniert, anschließend mit einer wäßrigen Zinksalzlösung imprägniert und danach zur Zersetzung des Zinksalzes zum Zinkoxid einer erneuten Temperaturbehandlung unterzogen.

Kupferhaltige Katalysatoren haben den Nachteil, daß sie in einer Nebenreaktion Alkohole, besonders Methanol, bilden. Enthalten die zu konvertierenden Gase auch Ammoniak, so bilden sich daraus Amine wie Mono-, Di- und Trimethylamin. Die Nebenproduktbildung ist umso stärker, je aktiver die Katalysatoren, je höher die Reaktortemperaturen sind und je niedriger der Dampfgehalt des Konvertierungsgases liegt. Bei Verwendung hochaktiver Katalysatoren und Anwendung geringer Dampfgehalte aus Energieersparnisgründen, haben sich die Probleme aus der vermehrten Nebenproduktbildung verschärft, so daß großes Interesse besteht, die Methanol- und Aminbildung zu verringern.

Die bekannten Katalysatoren sind hinsichtlich Aktivität, Selektivität und Standzeit noch nicht zufriedenstellend.

Es ist auch schon vorgeschlagen worden (EP-A-205 130), die unerwünschte Methanolbildung an Tieftemperatur-Konvertierungskatalysatoren, die durch Fällung einer Mischlösung bestehend aus Kupfer-, Zink- und Aluminiumnitrat mit Soda hergestellt wurden, durch Dotierung mit Alkali- und insbesondere Cäsium- und Kaliumverbindungen zu verringern.

Es wurde nun gefunden, daß man die Methanol- und Aminbildung besonders stark zurückdrängen bzw. vermeiden kann, wenn man kupferhaltige Katalysatoren für die Tieftemperaturkonvertierung bei Temperaturen von 150 bis 300 °C und 10 bis 40 bar, die zusätzlich Aluminium, Zink gegebenenfalls in Form der Verbindungen oder Oxide enthalten und durch gemeinsame Fällung hergestellt werden, verwendet, die Kalium und eine an den Kaliumgehalt angepaßte BET-Oberfläche besitzen, wobei der Kaliumgehalt von 0,1 bis 3,0 Gew.% bei einer BET-Oberfläche von 30 bis 160 m²/g eingestellt wird.

Die Herstellung dieser Katalysatoren erfolgt vorteilhaft durch gemeinsame Ausfällung der schwer- oder unlöslichen Verbindung von Kupfer, Zink und Aluminium, wobei man während der Fällung den pH-Wert und die Fällungstemperatur bei 30 bis 90 °C konstant hält und nach Alterung des Niederschlages im schwach sauren Bereich, Filtrierung, den Filterkuchen mit der erforderlichen Menge einer Kaliumverbindung versetzt, zur homogenen Verteilung der Kaliumverbindung mit $H_2O$ aufschlämmt, trocknet und in bekannter Weise verarbeitet, wobei durch Aufrechterhaltung eines Fäll-pH-Wertes von 5,5 bis 8,0 BET-Oberfläche von 30 bis 160 $m^2 \cdot g$ eingestellt werden.

Überraschenderweise wurde nun gefunden, daß die Aminbildung an den erfindungsgemäßen Tieftemperaturkonvertierungskatalysatoren, die durch eine eingestellte Kaliumdotierung und durch Anpassung der BET-Oberfläche an diesen Kaliumgehalt gekennzeichnet sind, deutlich gesenkt werden kann, ohne die Aktivität zu beeinträchtigen. So kann mit gleichem K-Gehalt durch Verkleinerung der BET-Oberfläche die Aminbildung gesenkt und die Selektivität verbessert werden; d.h., um die Aminbildung auf das gleiche Maß zu reduzieren, ist bei einer größeren BET-Oberfläche vergleichsweise mehr $K_2O$ nötig als bei einer kleineren Oberfläche. Auch die Methanolbildung kann an diesen Katalysatoren zurückgedrängt werden.

Deutliche Effekte bei der Unterbindung der Nebenreaktionen werden bei einem $K_2O$-Anteil von 0,1 bis 3,0 % $K_2O$, insbesondere 0,7 bis 1,8 % $K_2O$, und bei einer BET-Oberfläche von 30 bis 160 $m^2 g$, vorzugsweise 40 bis 90 $m^2 g$, erzielt.

Es wurde gefunden, daß bei gleichem $K_2O$-Gehalt die Verringerung der BET-Oberfläche zu einer Verminderung der Aminbildung führt. Durch Optimierung des $K_2O$-Gehaltes und durch Anpassung der BET-Oberfläche an die $K_2O$-Dotierung kann die Methanolbildung auf etwa 1/10, die in Gegenwart von Ammoniak auftretende Aminbildung auf etwa 1/20 gesenkt werden.

Die Anpassung der BET-Oberfläche an den Kaliumgehalt kann z.B. durch Modifizierung des Fäll-pH-Wertes von 5,5 bis 8,0, und des pH-Wertes der verwendeten Mischlösung aus Kupfer-, Zink- und Aluminiumsalzen von -1,0 bis +2,5 erfolgen.

Die Herstellung der Katalysatoren erfolgt vorteilhafterweise durch gemeinsame Ausfällung schwer- oder unlöslicher Kupferhydroxycarbonate zusammen mit den entsprechenden Zink- und Aluminiumverbindungen unter Konstanthaltung des Fäll-pH-Wertes. Der Niederschlag wird abfiltriert und gewaschen, bis er von Fremddionen, z.B. Nitrat, frei ist. Die Dotierung erfolgt zweckmäßig durch Zugabe einer löslichen Kaliumverbindung, die nach der Trocknung keine Fremddionen hinterläßt. Das so vorliegende Fällungsprodukt wird bei 100 bis 450 °C getrocknet, anschließend 0,2 bis 5 Stunden bei 250 bis 950 °C calciniert und durch Zusatz eines Tablettierhilfsmittels zu Formkörpern tablettiert.

Die Katalysatoren weisen im allgemeinen einen CuO-Gehalt von 30 bis 50 Gew.%, vorzugsweise 35 bis 45 Gew.%, einen ZnO-Gehalt von 5 bis 50 %, vorzugsweise 15 bis 45 Gew.%, einen $Al_2O_3$-Gehalt von 10 bis 50 %, vorzugsweise 13 bis 45 Gew.%, und eine $K_2O$-Gehalt zwischen 0,1 bis 3,0 Gew.%, insbesondere 0,7 bis 1,8 Gew.%, und eine BET-Oberfläche von 30 bis 160 $m^2/g$, vorzugsweise 40 bis 90 $m^2/g$, auf.

Bei gleichem Kaliumgehalt führt eine Verkleinerung der BET-Oberfläche zu einer deutlichen Verminderung der Aminbildung.

Eine bevorzugte Herstellung der Katalysatoren kann wie folgt durchgeführt werden:

a) indem man aus einer wäßrigen Lösung, die ein wasserlösliches Kupfersalz, ein wasserlösliches Zinksalz und ein wasserlösliches Aluminiumsalz enthält unter Verwendung einer Lösung von Natriumcarbonat oder Natriumhydrogencarbonat als Präzipitationsmittel eine Kupfer-, Zink- und Aluminiumkomponente unter Rühren gemeinsam ausfällt, wobei während der Fällung ein pH-Wert in der Suspension von 5,5 bis 8,0, vorzugsweise von 6,0 bis 7,0, sowie eine Temperatur von 30 bis 90 °C, vorzugsweise von 40 bis 75 °C, aufrechterhalten wird,

b) nach Beendigung der Niederschlagsbildung das Fällungsprodukt nachzualtern bzw. zu konditionieren, dahingehend, daß das Fällungsprodukt in der Suspension bei einer Temperatur von 30 bis 90 °C, vorzugsweise von 40 bis 75 °C 0,01 bis zu 10 Stunden, vorzugsweise 0,1 bis 2 Stunden, gegebenenfalls nach Überführen in einen zweiten Behälter, nachgerührt wird, wobei der pH-Wert in der Suspension nicht mehr als 0,5 Einheiten, vorzugsweise nicht mehr als 0,3 Einheiten von dem Wert während der Fällung abweichen soll und gegebenenfalls durch Zuführen weiterer Metallsalzlösung aufrechtzuerhalten wird,

c) nach Beendigung der Alterung den Niederschlag vom Reaktionslösungsmittel abtrennt, von Fremddionen freiwäscht, so daß der Natriumgehalt, bezogen auf die 2 h bei 900 °C geglühte Masse des Fällungsproduktes, 0,15 Gew.% nicht überschreitet;

d) nach Beendigung der Waschung dem Filterkuchen 0,1 bis 3,0 Gew.% $K_2O$, bezogen auf die 2 h bei 900 °C geglühte Masse des Fällungsproduktes, in Form einer löslichen Kaliumverbindung zusetzt und die Mischung in Wasser suspendiert wird, so daß der Feststoffanteil der Suspension 10 bis 30 Gew.% beträgt;

e) nach Beendigung des Suspendierens die wäßrige Maische sprühtrocknet, wobei die Trocknungstemperatur vorzugsweise zwischen 150 und 450 °C liegt und anschließend einer Temperaturbehandlung unterzieht, dahingehend, daß das getrocknete Produkt mindestens 0,1 Stunden, vorzugsweise zwischen 0,2 bis 5 Stunden einer Temperatur von mindestens 250 °C, vorzugsweise zwischen 300 und 950 °C, aussetzt und

f) nach Beendigung der Temperaturbehandlung den Feststoff mit einem Tablettierhilfsmittel vermischt

EP 0 367 088 A1

und zu Katalysatorformkörpern tablettiert.

Die Kupfer-, Zink- und Aluminiumkomponenten werden aus ihren löslichen Salzen copräzipitiert unter Verwendung spezifischer Fällungsbedingungen, spezifischer Alterungs- und Konditionierbedingungen und nach dem Auswaschen der Fremdionen und einer gezielten Menge einer wäßrigen Kaliumsalzlösung versetzt, wobei die spezifische Temperaturbehandlungsbedingungen für das getrocknete und ausgewaschene Fällungsprodukt angewandt werden.

Als Beispiele für wasserlösliche Kupfer-, Zink- und Aluminiumsalze, die bei der Stufe a) verwendet werden, kommen solche in Frage, die ebenfalls keine Elemente wie Schwefel und Halogene enthalten und ebenfalls bei höheren Tempraturen in die Oxide überführt werden können, wie beispielsweise Nitrate oder Acetate, wobei die Nitrate besonders bevorzugt werden.

Die Herstellung des Katalysators geht aus von einer wäßrigen Lösung, die ein wasserlösliches Kupfer-(II)-salz, ein wasserlösliches Zinksalz und ein wasserlösliches Aluminiumsalz enthält und einen pH-Wert im Bereich von -1,0 bis +2,5 aufweist. Das Verhältnis des Kupfersalzes, des Zinksalzes und des Aluminiumsalzes zueinander in der wäßrigen Lösung richtet sich nach dem gewünschten Verhältnis von Kupfer zu Zink zu Aluminium in fertigen Katalysator. Das erfindungsgemäße Verfahren ist besonders vorteilhaft dann anzuwenden, wenn im fertigen Katalysator ein Verhältnis von Kupferoxid (CuO) zu Zinkoxid (ZnO) zu Aluminiumoxid ($Al_2O_3$) zu Kaliumoxid ($K_2O$) von 30 bis 50, vorzugsweise 35 bis 45 Gew.% CuO zu 50 bis 5, vorzugsweise 45 bis 15 Gew.% ZnO zu 10 bis 50, vorzugsweise 13 bis 45 Gew.% $Al_2O_3$ zu 0,1 bis 3,0, vorzugsweise 0,5 bis 1,8 Gew.% $K_2O$, bei einer BET-Oberfläche von 30 bis 160 $m^2/g$, vorzugsweise 40 bis 90 $m^2/g$ vorliegt.

Die Konzentration des wasserlöslichen Kupfersalzes, des wasserlöslichen Zinksalzes und des wasserlöslichen Aluminiumsalzes im wäßrigen Medium kann in weitem Ausmaße variiert werden, entsprechend der Art der verwendeten Salze. Im allgemeinen ist es vorteilhaft, wenn die Gesamtkonzentration an Metallsalzen in der Lösung wesentlich niedriger als die Löslichkeit selbst ist, z.B. eine Konzentration, die weniger als 2,5 Mol/l beträgt.

Das alkalische Ausfällungsmittel für die Ausfällung der Kupfer-Zink-Aluminium-Mischfällung als unlöslicher Feststoff aus der wäßrigen Lösung der wasserlöslichen Metallsalze können wäßrige Lösungen von Natrium carbonat, Natriumbicarbonat, Ammoniumcarbonat oder Ammoniumhydrogencarbonat sein, wobei wäßrige Sodalösungen besonders bevorzugt verwendet werden. Die Konzentration des Ausfällungsmittels im wäßrigen Medium kann ebenfalls in weitem Ausmaße variiert werden. Es ist im allgemeinen bevorzugt, eine Lösung zu verwenden, bei der die Sodakonzentration bzw. die Konzentration des alkalischen Fällungsmittels wesentlich niedriger als die Löslichkeit selbst ist, z.B. eine Konzentration von weniger als 2,1 Mol/l.

Zur Durchführung der Fällung ist es zweckmäßig, Wasser in den Fällbehälter vorzulegen und die auf die Fälltemperatur erwärmten Lösungen aus Metallsalzen und dem alkalischen Fällungsmittel gleichzeitig dem Fällbehälter zuzuführen, dahingehend, daß während der Fällung ein pH-Wert in der Suspension von 5,5 bis 8,0, vorzugsweise von 6,0 bis 7,0 aufrechterhalten wird. Der pH-Wert der Suspension bzw. die Zulaufgeschwindigkeit der beiden Ströme können zweckmäßigerweise mittels einer pH-Wert-Regelung gesteuert werden.

Die Temperatur, bei der Niederschlagsbildungsreaktion durchgeführt wird, liegt zweckmäßigerweise in einem Bereich von 30 bis 90°C. Besonders bevorzugt wird die Fällung im Bereich von 40 bis 75°C durchgeführt.

Der Zeitraum, in welchem die Niederschlagsbildungsreaktion durchzuführen ist, kann in einem weiten Bereich gewählt werden. Zweckmäßigerweise erfolgt die Fällung innerhalb eines Zeitraumes von 10 Minuten bis zu einer Stunde, wobei bei Bedarf durchaus auch längere Zeiten oder auch kürzere, z.B. nur wenige Minuten, ausreichend sein können.

Nach Beendigung der Niederschlagsbildung wird das Fällungsprodukt nachgealtert bzw. konditioniert. . Dazu wird das Fällungsprodukt in der Suspension 0,01 bis zu 10 Stunden, vorzugsweise 0,1 bis 2 Stunden nachgerührt. Diese Alterung kann im Fällungsbehälter selbst durchgeführt werden. Zweckmäßigerweise wird während des Alterungsvorgangs das Fällungsprodukt gerührt.

Die Temperatur, bei der die Alterung vorgenommen wird, liegt in dem Bereich, in dem die Fällung selbst durchgeführt wird. Die Alterung sollte deshalb in einem Bereich von 30 bis 90°C, vorzugsweise in einem Bereich von 40 bis 75°C durchgeführt werden.

Im Verlauf dieses Alterungsvorganges ist ebenfalls der pH-Wert der das Fällungsprodukt enthaltenden Suspension zu kontrollieren und gegebenenfalls durch Zugabe von weiterer Metallsalzlösung so einzuregeln, daß der pH-Wert der Suspension nicht mehr als 0,5 Einheiten, vorzugsweise nicht mehr als 0,3 Einheiten von dem pH-Wert während der Fällung abweicht.

Nach Durchführung der Alterung wird durch übliche Maßnahmen, wie durch Filtrieren, das gealterte bzw. konditionierte Präzipitationsprodukt vom Reaktionslösungsmittel abgetrennt. Das abgetrennte Produkt

4

wird danach eingehend zur Entfernung von verbleibendem Ausfällungsmittel und anderen Fremdionen, z.B. Nitrat, gewaschen.

Das ausgewaschene Produkt wird danach mit einer wäßrigen Kaliumsalzlösung, vorzugsweise einer Kaliumcarbonatlösung, versetzt. Als besonders vorteilhafte Vorgehensweise hat sich herausgestellt, das ausgewaschene Produkt in Wasser zu suspendieren, so daß der Feststoffanteil der so erhaltenen Suspension etwa 10 bis 30 Gew.%, vorzugsweise 15 bis 23 Gew.%, beträgt und dazu, unter Rühren der Suspension, die entsprechende Menge der wäßrigen Kaliumsalzlösung gegeben wird.

Bei der Art des zu verwendenden Kaliumsalzes sollten keine die katalytischen Eigenschaften beeinträchtigenden Anionen, wie z.B. Chloride, eingeführt werden.

Anschließend wird die kaliumhaltige Mischung des Fällproduktes einer Trocknung unterzogen, wofür ein Temperaturbereich von 100 bis etwa 450 °C in Frage kommt.

Danach schließt sich eine Temperaturbehandlung an, wobei das getrocknete Produkt 0,1 bis 20 Stunden, vorzugsweise 0,2 bis 5 Stunden einer Temperatur von 250 bis 950 °C, vorzugsweise einer Temperatur von 300 bis 750 °C ausgesetzt wird, wobei auch eine stufenweise Temperaturbehandlung von Vorteil sein kann.

Die Durchführung dieser Temperaturbehandlung kann in ruhender oder in einer bewegten Schicht, z.B. in einem Drehrohr oder in einem Wirbelbett durchgeführt werden. Als Atmosphäre kommt Luft, Stickstoff oder ein Verbrennungsgas, welches frei von Katalysatorgiften wie Schwefel oder Halogenverbindungen sein muß, in Frage.

Nach der Durchführung der Temperaturbehandlung erfolgt die Verformung der Katalysatormasse zum entsprechenden Formkörper. Bei Bedarf kann vor der Verformung eine Pulverisierung der temperaturbehandelten Katalysatormasse vorgenommen werden.

Ein bevorzugtes Verfahren zur Herstellung von erfindungsgemäßen Katalysatorformkörpern ist die Tablettierung, wobei bei Bedarf auch eine Verformung des pulverisierten Produktes, eine weitere Pulverisierung des vorgeformten Produktes und dann die Druckverformung zu den gewünschten Katalysatorformkörpern durchgeführt werden kann.

Beispiele

Katalysatorprüfung

Zum Zwecke des Vergleichs wird jeder der in den Beispielen 1 bis 8 nach der beschriebenen Weise hergestellten Katalysatoren in einer Druckapparatur zunächst mit einem Stickstoffgasstrom auf 180 °C aufgeheizt. Bei Erreichen dieser Temperatur wird dem Gasstrom zunächst 0,5 Vol.-% Wasserstoff beigemischt. Nach 8 Stunden wird dann der Wasserstoffanteil auf 1,5 bis 2 Vol.-% erhöht, wobei der Katalysator noch weitere 48 Stunden mit diesem Gasgemisch beaufschlagt wird.

Testbedingungen

Nach der Reduktion wurde der Katalysator mit folgendem Gasgemisch beaufschlagt:

| a) Aktivitätstest | | |
|---|---|---|
| Trockengaszusammensetzung: | $H_2$ | 60 Vol.-% |
| | CO | 3 Vol.-% |
| | $CO_2$ | 15 Vol.-% |
| | $N_2$ | 22 Vol.-% |
| Wasserdampf/Trockengas: | | 0,25 v/v |
| GHSV (bezogen auf Trockengas): | | $10\,000\ Nl \times l^{-1} \times h^{-1}$ |
| Katalysatormenge: | | 15 ml |
| Betriebsdruck: | | 30 bar |
| Temperatur: | | 180 - 250 °C |

| b) Selektivitätstest: | | |
|---|---|---|
| Trockengaszusammensetzung: | $H_2$ | 60 Vol.-% |
| | CO | 3 Vol.-% |
| | $CO_2$ | 15 Vol.-% |
| | $N_2$ | 22 Vol.-% |
| | $NH_3$ | 125 mg/Nm³ Trockengas |
| Wasserdampf/Trockengas: | | 0,4 v/v |
| GHSV (bezogen auf Trockengas): | | 3 000 Nl x 1⁻¹ x h⁻¹ |
| Katalysatormenge: | | 50 ml |
| Betriebsdruck: | | 30 bar |
| Temperatur: | | 250 °C |

Als Aktivitätsmaß wird der Umsatz, bezogen auf den thermodynamischen Gleichgewichtswert (= 100 %), bei 195 °C angegeben.

$$\% \, U \; \frac{CO_E - CO_R}{CO_E - CO_{GGW}} \times 100$$

$CO_E$ = Eingangsgaskonzentration CO
$CO_R$ = Restkonzentration CO
$CO_{GGW}$ = Gleichgewichtskonzentration CO

Das Ausmaß der Nebenproduktbildung an dem Katalysator wird folgendermaßen bestimmt: Nach 24stündigem Fahren bei einer Ölbadtemperatur von 220 °C wird eine Probe des wäßrigen Kondensats entnommen und gaschromatographisch analysiert.

Vergleichsbeispiel A

Lösung I:
2 430 g Cu(NO₃)₂ x 3 H₂O
1 462 g Zn(NO₃)₂ x 6 H₂O
5 887 g Al(NO₃)₃ x 9 H₂O
werden in 20,3 l Wasser gelöst. Der pH-Wert der Lösung beträgt 1,5.
Lösung II: 4 000 g Soda (techn.) werden in 1 l Wasser gelöst.
Die Lösungen werden getrennt auf 50 °C erwärmt. im Fällgefäß werden 5 l Wasser bei 50 °C vorgelegt. Die beiden Lösungen werden unter Rühren im Fällgefäß in der Weise vereinigt, daß der pH-Wert während der Fällung 6,0 beträgt. Der Niederschlag wird unter Rühren nochmals 2 Stunden in der Mutterlauge gealtert, wobei zur Konstanthaltung des pH-Wertes gegebenenfalls noch Lösung I hinzugegeben wird. Anschließend wird abfiltriert und mit Wasser von Fremdionen freigewaschen. Der gewaschene Niederschlag wird bei 100 bis 200 °C sprühgetrocknet, 4 Stunden bei 350 °C calciniert und nach Zusatz von 2 % Graphit zu Tabletten verpreßt.
Der so dargestellte Katalysator enthält 40 Gew.% CuO, 20 Gew.% ZnO und 40 Gew.% Al₂O₃ und weist nach der Tablettierung eine BET-Oberfläche von 110 m²/g auf.

Vergleichsbeispiel B

Das Verfahren von Beispiel 1 wird wiederholt mit der Ausnahme, daß vor dem Sprühtrocknen eine Lösung von 138 g K₂CO₃ in destilliertem Wasser dem gewaschenen Niederschlag zugegeben wird. Der so dargestellte Katalysator weist eine BET-Oberfläche von 86 m²/g auf.

Vergleichsbeispiel C

In 400 Teilen Wasser werden 26 Teile Böhmitpulver (AlOOH) suspendiert. Dann läßt man gleichzeitig eine wäßrige Lösung von Zinknitrat und Kupfernitrat, die 32 Teile Gu und 32 Teile Zn enthält, und eine 20 %ige Sodalösung zulaufen und hält durch eine pH-Wert-Regelung den pH-Wert auf 6,5. Die Temperatur der Fäll-Lösung wird auf 50 °C gehalten. Nach Beendigung der Fällung wird filtriert, gewaschen, bei 200 °C getrocknet und 100 g des getrockneten Pulvers mit 100 ml einer wäßrigen $K_2CO_3$-Lösung angemaischt. Diese Lösung enthält 0,76 g $K_2CO_3$. Die entstandene Paste wird getrocknet, mit 2 Gew.% Graphit vermischt und anschließend zu Tabletten mit 3 mm Durchmesser und 3 mm Höhe verpreßt; BET-Oberfläche = 105 $m^2$ g.

Vergleichsbeispiel D

Das Verfahren von Beispiel C wird wiederholt mit der Ausnahme, daß 100 g des getrockneten Pulvers mit 100 ml einer wäßrigen Lösung angemaischt wird, die 3,0 g $K_2CO_3$ enthält; BET-Oberfläche = 108 $m^2$ g.

Erfindungsgemäße Beispiele

Beispiel 1

Es wird analog der im Vergleichsbeispiel A angegebenen Arbeitsweise gearbeitet, wobei nach dem Waschen ein Teil des Filterkuchens mit einer entsprechenden Menge an $K_2CO_3$ derart versetzt wird, daß, bezogen auf eine bei 1 Stunde und 900 °C geglühten Probe, der Gehalt an $K_2O$ 1,50 Gew.% beträgt. Danach wird wie im Vergleichsbeispiel A verfahren. Dieser Katalysator weist nach der Tablettierung eine BET-Oberfläche von 119 $m^2$/g auf.

Beispiel 2

Es wird wie im Vergleichsbeispiel A gearbeitet, wobei der pH-Wert der Lösung I -0,7 beträgt ($HNO_3$-Zugabe). Die Fällung wird bei einem pH-Wert von 6,5 durchgeführt. Der Nachrühr-pH wird ebenfalls bei 6,5 gehalten. Ein Teil des Filterkuchens wird mit $K_2CO_3$ derart versetzt, daß der $K_2O$-Gehalt, bezogen auf eine bei 1 Stunde und 900 °C geglühten Probe 1,46 Gew.%$K_2O$ beträgt; BET-Oberfläche = 82 $m^2$/g.

Beispiel 3

Es wird wie im Vergleichsverfahren A verfahren, mit dem Unterschied, daß bei pH = 6,7 gefällt und nachgerührt wird. Ein Teil des so gefällten Filterkuchens wird mit $K_2CO_3$ derart dotiert, daß der Gehalt an $K_2O$ = 1,51 Gew.% beträgt. Die Weiterverarbeitung erfolgt wie im Vergleichsbeispiel A. Der Katalysator weist nach der Tablettierung eine BET-Oberfläche von 43 $m^2$/g auf.

Beispiel 4

Wie Beispiel 1, nur mit $K_2O$ = 1,66 Gew.% versetzt. BET-Oberfläche = 111 $m^2$/g.

Beispiel 5

Es wird wie im Beispiel 2 verfahren, wobei der Zusatz von $K_2CO_3$ entfällt. Dieser Katalysator weist nach der Tablettierung eine BET-Oberfläche von 69 $m^2$/g auf.

Beispiel 6

Es wird wie im Beispiel 3 verfahren, nur ohne Zusatz von $K_2CO_3$; BET-Oberfläche = 43 m² g.

Beispiel 7

Es wird wie im Beispiel 2 verfahren, wobei der Filterkuchen mit $K_2CO_3$ derart versetzt wurde, daß der $K_2O$-Gehalt 1,18 Gew.% beträgt; BET-Oberfläche = 85 m² g.

Beispiel 8

Wie Beispiel 3 mit dem Unterschied, daß der Filterkuchen mit $K_2CO_3$ derart dotiert wurde, daß der $K_2O$-Gehalt des Katalysators 0,90 Gew.% beträgt; BET-Oberfläche = 46 m²·g.

| Ergebnisse der Aktivitäts- und Selektivitätsprüfungen | | | | | |
|---|---|---|---|---|---|
| Beispiele | BET [m²·g] | $K_2O$ [%] | Methanol [%] | Amine [ppm] | Umsatz [%] |
| Vergleichsbeispiel A | 110 | <0,01 | 0,63 | 448 | 96 |
| Vergleichsbeispiel B | 86 | 4,7 | 0,008 | < 1 | 69 |
| Vergleichsbeispiel C | 105 | 0,5 | 0,15 | 18 | 90 |
| Vergleichsbeispiel D | 108 | 2,0 | 0,09 | < 1 | 62 |
| Beispiel 1 | 119 | 1,50 | 0,50 | 71 | 96 |
| Beispiel 2 | 82 | 1,46 | 0,10 | 4 | 97 |
| Beispiel 3 | 43 | 1,51 | 0,12 | 4 | 97 |
| Beispiel 4 | 111 | 1,66 | 0,12 | 21 | 98 |
| Beispiel 5 | 69 | <0,01 | 0,61 | 270 | 96 |
| Beispiel 6 | 43 | <0,01 | 0,58 | 157 | 94 |
| Beispiel 7 | 85 | 1,18 | 0,53 | 72 | 95 |
| Beispiel 8 | 46 | 0,90 | 0,56 | 56 | 96 |

Die spez. Oberfläche wird mit der BET-Methode bestimmt. [S. J. Gregg, K. S. W. Sing, "Adsorption, Surface Area and Porosity", Academic Press, New York 1982]

Bei Verwendung des Vergleichskatalysators mit einer BET-Oberfläche von 110 m²/g werden 0,63 Gew.% Methanol und 448 ppm Amine gebildet.

Eine Verkleinerung der Oberfläche (Beispiele 5, 6) reduziert die Aminbildung deutlich (270 bzw. 157 ppm).

Weiterhin wird die Amin- und Methanolbildung durch $K_2O$-Dotierung deutlich vermindert (Vergleichsbeispiel A, Beispiele 1, 4).

Es zeigt sich, daß bei einer kleineren Oberfläche zur Verminderung der Aminbildung vergleichsweise weniger $K_2O$ nötig ist, als bei einer größeren Oberfläche (s. Beispiele 1, 7 und 8).

Wird bei gleicher Kaliumdotierung die BET-Oberfläche verringert, sinkt die Amin- und Methanolbildung stark ab (Beispiele 1, 2 und 3).

Es empfiehlt sich, die $K_2O$-Dotierung möglichst zu minimieren, da ein hoher $K_2O$-Gehalt negativen Einfluß auf die Aktivität ausübt (s. Vergleichsbeispiele B, D).

## Ansprüche

1. Kupferhaltige Katalysatoren für die Tieftemperaturkonvertierung bei Temperaturen von 150 bis 300° C und 10 bis 40 bar, die zusätzlich Aluminium, Zink gegebenenfalls in Form der Verbindungen oder Oxide enthalten, die durch gemeinsame Fällung hergestellt werden, dadurch gekennzeichnet, daß die kupferhaltigen Katalysatoren Kalium und eine an den Kaliumgehalt angepaßte BET-Oberfläche besitzen, wobei der Kaliumgehalt von 0,1 bis 3,0 Gew.% bei einer BET-Oberfläche von 30 bis 160 m²/g eingestellt ist.

2. Verfahren zur Herstellung der Katalysatoren nach Anspruch 1 durch gemeinsame Ausfällung der schwer- oder unlöslichen Verbindung von Kupfer, Zink und Aluminium, dadurch gekennzeichnet, daß man während der Fällung den pH-Wert im Bereich von 5,5 bis 8,0 und die Fällungstemperatur bei 30 bis 90° C konstant hält und nach Alterung des Niederschlages, Filtrierung, den Filterkuchen mit der erforderlichen Menge einer Kaliumverbindung versetzt, zur homogenen Verteilung der Kaliumverbindung mit $H_2O$ aufschlämmt, trocknet und in bekannter Weise verarbeitet, wobei durch Aufrechterhaltung eines Fäll-pH-Wertes von 5,5 bis 8,0 BET-Oberflächen von 30 bis 160 $m^2$ g eingestellt werden.

3. Verfahren zur Herstellung einer Katalysatormasse nach Anspruch 1, die Kupferoxid, Zinkoxid und Aluminiumoxid als wesentliche Komponenten enthält, dadurch gekennzeichnet, daß man:

a) aus einer wäßrigen Lösung, die ein wasserlösliches Zinksalz, ein wasserlösliches Kupfersalz und ein wasserlösliches Aluminiumsalz enthält, unter Verwendung einer wäßrigen Lösung eines alkalischen Ausfällungsmittels ein Fällungsprodukt erzeugt, wobei während der Füllung ein pH-Wert in der Suspension von 5,5 bis 8,0, vorzugsweise von 6,0 bis 7,0 sowie eine Temperatur von 30 bis 90° C, vorzugsweise von 40 bis 75° C aufrechterhalten wird;

b) nach Beendigung der Niederschlagsbildung das Fällungsprodukt nachaltert bzw. konditioniert, dahingehend, daß das Fällungsprodukt in der Suspension 0,01 bis zu 10 Stunden, vorzugsweise 0,1 bis 2 Stunden, gegebenenfalls nach Überführen in einen zweiten Behälter, nachgerührt wird, wobei der pH-Wert in der Lösung nicht mehr als 0,5 Einheiten, vorzugsweise nicht mehr als 0,3 Einheiten von dem Wert während der Fällung abweichen soll und gegebenenfalls durch Zuführen weiterer Kupfer-, Zink- und Aluminiumsaizlösung aufrechterhalten wird;

c) nach Beendigung der Alterung den Niederschlag vom Reaktionslösungsmittel abtrennt, von Fremdionen freiwäscht, so daß der Natriumgehalt, bezogen auf die 2 h bei 900° C geglühte Masse des Fällungsproduktes, 0,15 Gew.% nicht überschreitet;

d) nach Beendigung der Waschung dem Filterkuchen 0,1 bis 3,0 Gew.% $K_2O$, bezogen auf die 2 h bei 900° C geglühte Masse des Fällungsproduktes, in Form einer löslichen Kaliumverbindung zusetzt und die Mischung in Wasser suspendiert, so daß der Feststoffanteil der Suspension 10 bis 30 Gew.% beträgt;

e) nach Beendigung des Suspendierens die wäßrige Maische sprühtrocknet, wobei die Trocknungstemperatur vorzugsweise zwischen 150 und 450° C liegt und anschließend einer Temperaturbehandlung unterzieht, dahingehend, daß das getrocknete Produkt mindestens 0,1 Stunden, vorzugsweise zwischen 0,2 bis 5 Stunden einer Temperatur von mindestens 250° C, vorzugsweise zwischen 300 und 950° C, aussetzt und

f) nach Beendigung der Temperaturbehandlung den Feststoff mit einem Tablettierhilfsmittel vermischt und zu Katalysatorformkörpern tablettiert.

4. Katalysatormasse, dadurch gekennzeichnet, daß sie nach einem Verfahren der Ansprüche 2 und 3 erhalten worden ist.

5. Katalysatormasse nach Anspruch 4, dadurch gekennzeichnet, daß sie als wesentliche Komponenten Kupferoxid, Zinkoxid, Aluminiumoxid und Kaliumoxid enthält und ein Verhältnis von Kupferoxid zu Zinkoxid zu Aluminiumoxid zu Kaliumoxid von 30 bis 50, vorzugsweise 35 bis 45 Gew.% Kupferoxid, zu 5 bis 50, vorzugsweise 15 bis 45 Gew.% Zinkoxid, zu 10 bis 50, vorzugsweise 13 bis 45 Gew.% Aluminiumoxid, 0,1 bis 3,0, vorzugsweise 0,5 bis 1,8 Gew.% Kaliumoxid aufweist.

6. Verwendung der Katalysatormasse, hergestellt nach dem Verfahren nach einem der Ansprüche 2 und 3, zur Umsetzung von Kohlenmonoxid und Wasser zu Kohlendioxid und Wasserstoff.

7. Verfahren zur Herstellung von Wasserstoff durch Umsetzung kohlenmonoxidhaltiger Gase mit Wasserdampf bei Temperaturen von 150 bis 300° C, dadurch gekennzeichnet, daß als Katalysator eine Katalysatormasse verwendet wird, die nach einem Verfahren der Ansprüche 2 und 3 erhalten worden ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 152 809 (SÜD CHEMIE AG)<br>* Zusammenfassung; Seiten 3-7; Beispiel 6; Tabelle II; Ansprüche 1-14 *<br>--- | 1,5 | B 01 J 23/80<br>C 01 B 3/16 |
| D,Y | EP-A-0 205 130 (BASF)<br>* Zusammenfassung; Spalten 2,3; Ansprüche 1-4 *<br>--- | 1-7 | |
| Y | DE-A-3 717 111 (BASF)<br>* Zusammenfassung; Spalten 2-4; Ansprüche 1-7 *<br>--- | 2-7 | |
| A | EP-A-0 034 338 (SÜD CHEMIE AG)<br>--- | | |
| A | EP-A-0 054 674 (BASF)<br>----- | | |

RECHERCHIERTE
SACHGEBIETE (Int. Cl.5)

B 01 J
C 01 B

Der vorliegende Recherchenbericht wurde für alle Patentansprüche erstellt

| Recherchenort | Abschlußdatum der Recherche | Prüfer |
|---|---|---|
| DEN HAAG | 29-11-1989 | LO CONTE C. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...............................................................................
& : Mitglied der gleichen Patentfamilie, übereinstimmendes
    Dokument

EPO FORM 1503 03.82 (P0403)